# EUROPÄISCHE PATENTANMELDUNG

(11) **EP 1 736 294 A2**
(43) Veröffentlichungstag der Anmeldung: **27.12.2006**
(21) Anmeldenummer: 06113949.9
(22) Anmeldetag: 15.05.2006
(51) Int. Cl.: B29C 44/12

(54) **Kernmaterial für Sandwichelementen**

(30) Priorität: 21.06.2005 DE 102005029009
(71) Anmelder: BASF Aktiengesellschaft, 67063 Ludwigshafen (DE)
(72) Erfinder: Lambert, Jürgen, 67466, Lambrecht (DE); Andrijanic, Petar, 67071, Ludwigshafen (DE)

(57) **Zusammenfassung**

Ein Formkörper aus Thermoplast-Partikelschaumstoff (1), insbesondere expandiertem Polypropylen (EPP) mit einem eingeschäumten Gitterkern (2), insbesondere aus einer Glasfasergewebematte, Verfahren zur Herstellung sowie Verwendung als Kernmaterial in Sandwichelementen.

## Beschreibung

Die Erfindung betrifft Formkörper aus Thermoplast-Partikelschaumstoff, deren Verwendung als Kernmaterial in Sandwichelementen sowie Verfahren zu deren Herstellung.

Für viele Anwendungen im Schiff-, Luftfahrt-, Windenergieanlagen- und Fahrzeugbau besteht Bedarf an Leichtbauteilen, die neben einem geringen Gewicht eine hohe Biegesteifigkeit aufweisen. Hierfür eignen sich in der Regel Sandwichelemente, bei denen die Deckschichten thermisch mit einem Kernmaterial in Doppelbandanlagen zu Plattenwaren oder in Thermoformanlagen zu kleinen Verbundteilen gepresst werden.

Platten aus Polypropylen-Partikelschaumstoff haben sich hierbei als Kernmaterial für derartige Sandwichelemente bewährt. So sind beispielsweise Sandwichelemente mit einer Kernschicht aus Polypropylen-Partikelschaumstoff und Deckschichten aus faserverstärktem Polypropylen in DE-A 195 44 451 und EP-A 1 106 344 beschrieben.

Großflächige Bauteile, insbesondere solche mit komplexen Formen, sind mit den genannten Fertigungsmethoden nicht einfach realisierbar. Großflächige Bauteile werden üblicherweise im sogenannten Vakuuminjektionsverfahren hergestellt. Hierbei werden die zu verbindenden Sandwichkomponenten mittels Injektion eines Kunstharzes unter Vakuum verformt und gehärtet. Die WO 03/024705 beschreibt die Herstellung eines Sandwichelements durch Vakuuminjektionstechnik, bei dem ein dreidimensionales Gewebe als Abstandshalter für die Deckschichten eingebracht wird.

Die WO 05/035217 beschreibt die Herstellung eines wabenförmigen Kernmaterials für Sandwichpanels aus mehreren extrudierten Polyesterschaumsträngen. Ein ähnliches Verfahren aus kontinuierlich extrudierten Polyolefinschaumsträngen wird in WO 05/014257 beschrieben.

Aufgabe der vorliegenden Erfindung war es, ein Kernmaterial für Sandwichkonstruktionen mit geringem Gewicht, hoher Druckfestigkeit und hoher Flexibilität zu finden. Des weiteren sollte die Haftung zu den Deckschichten verbessert werden.

Demgemäß wurde ein Formkörper aus Thermoplast-Partikelschaumstoff gefunden, welcher einen eingeschäumten Gitterkern aufweist.

Der Thermoplast-Partikelschaumstoff kann durch Verschweißen von Schaumstoffpartikeln aus thermoplastischen Kunststoffen mit Heißluft oder Wasserdampf hergestellt werden. Bevorzugt werden hierbei als Schaumstoffpartikel Partikel aus vorgeschäumtem, expandierbarem Polystyrol (EPS), expandiertem Polypropylen (EPP) oder expandiertem Polyethylen (PPE) verwendet.

Die Dichte des Thermoplast-Partikelschaumstoffs liegt in der Regel im Bereich von 15 bis 150 g/m³, bevorzugt im Bereich von 20 bis 80 g/m³. Die zum Verschweißen verwendeten Schaumstoffpartikel weisen üblicherweise einen mittleren Durchmesser von 2 bis 8 mm, bevorzugt im Bereich von 3 bis 6 mm auf.

Als Kernmaterial für Sandwichelemente werden aufgrund der geringen Dichte, der hohen Flexibilität und der hohen Temperaturbeständigkeit bevorzugt Formkörper aus Polypropylen-Partikelschaumstoff verwendet. Besonders bevorzugt werden Homo- oder Copolymere des Propylens mit 0,1 bis 15 Gew.-% Ethylen und/oder But-1-en, insbesondere Propylen-Ethylen-Copolymere mit 1 bis 5 Gew.-% Ethylen. Sie weisen einen Kristallitschmelzpunkt von 130 bis 160°C, und eine Dichte von etwa 0,9 g/cm³ auf.

Gitterkerne sind aus verschiedenen Materialien und mit verschiedenen Strukturen, beispielsweise als Gewebe, Honeykomp- oder Röhrenverbundstrukturen bekannt. Als Gitterkern werden bevorzugt Wabenelemente aus Aluminium- Polypropylen- Kohlenstoff- Polyamid- oder Glas verwendet. Die Wabenelemente können aus verschiedenen Polygonen, beispielsweise 3-, 4-, 5- oder 6-eckigen Elementen zusammengesetzt sein. Die einzelnen Waben der Wabenelemente weisen in der Regel einen Durchmesser im Bereich von 5 bis 100 mm, bevorzugt im Bereich von 30 bis 60 mm auf. Die Wandstärke der Waben liegt in der Regel im Bereich von 0,1 bis 2,5 mm.

Besonders bevorzugt wird ein Gitterkern aus einer Glasfaser-Gewebematte mit einer Maschenweite im Bereich von 1 bis 25 mm und einem Rasterabstand im Bereich von 10 bis 150 mm.

Zur Herstellung des erfindungsgemäßen Formkörpers aus Thermoplast-Partikelschaumstoff eignet sich ein Verfahren, das die folgenden Schritte umfasst:
a) Zuschneiden und Einlegen eines Gitterkerns in ein Formwerkzeug,
b) Befüllen des Formwerkzeuges mit Thermoplast-Schaumpartikeln,
c) Verschweißen der Thermoplast-Schaumpartikel mit Heißluft oder Wasserdampf.

Aufgrund der Verwendung von Schaumstoff-Partikeln können mit diesem Verfahren auch Formkörper mit komplexeren Formen hergestellt werden. Für die Verwendung als Kernmaterial in Sandwichelementen können nach dem beschriebenen Verfahren zunächst Blöcke hergestellt werden, die anschließend zu Platten geschnitten werden. Bei der Verwendung von Gitterkernen aus Fasermaterialien, beispielsweise Glasfasern, können diese aufspalten und die einzelnen Fasern aus der Oberfläche des geschnittenen Thermoplast-Partikelschaumstoffs herausragen. Dadurch kann die Bindung einer anschließend aufgebrachten Deckschicht verbessert werden.

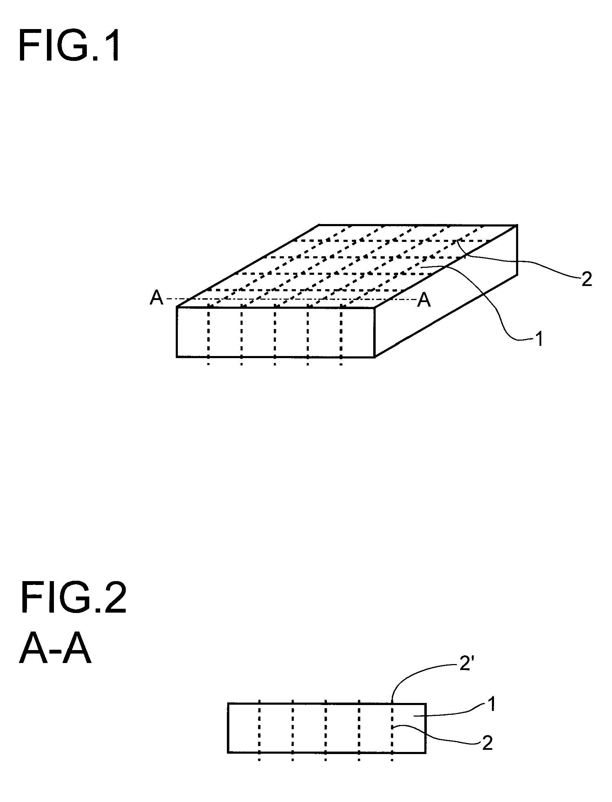

Figur 1 zeigt einen geschnittenen Formkörper aus Schaumstoffpartikeln (1) und einen Gitterkern (2). Figur 2 zeigt einen Querschnitt des Formkörpers entlang der Linie A-A mit den aus der Oberfläche herausragenden Fasern (2') des Gitterkerns.

Zur Herstellung der Sandwichelemente können auf die Thermoplast-Partikelschaumstoff-Platten oder Zuschnitte Deckschichten aus verschiedenen Materialien aufgebracht werden. Bevorzugt werden Deckschichten aus thermoplastischen Kunststoffen oder wärmehärtenden Harzen, wie Epoxid-, Polyester- oder Vinylesterharze. Besonders bevorzugt werden Sandwichelemente mit Deckschichten aus glasfaserverstärktem Kunststoff (GFK). Das Aufbringen der Deckschicht auf die Kernschicht aus Thermoplast-Partikelschaumstoff kann durch Laminieren oder durch Vakuuminjektion eines Kunststoffharzes erfolgen.

Die Dicke der Kernschicht beträgt in der Regel 5 bis 100 mm, bevorzugt 15 bis 50 mm. Die Deckschichten weisen in der Regel eine Dicke von 1 bis 10 mm, bevorzugt 2 bis 5 mm auf. Die erfindungsgemäßen Formkörper aus Thermoplast-Partikelschaumstoff weisen eine hohe Biegefestigkeit auf. Die Biegesteifigkeit des Gitterkerns bleibt selbst bei niederen Dichten des Thermoplast-Partikelschaumstoffs erhalten. Die Formkörper weisen eine hohe Flexibilität auf, so dass eine hohe Passgenauigkeit im Formteil gegeben ist. Auf diese Weise können auch Sandwichelemente mit komplexerer Form hergestellt werden.

Die erfindungsgemäßen Formkörper eignen sich insbesondere als Kernmaterial für Sandwichkonstruktionen im Schiff-, Luftfahrt-, Windenergieanlagen- und Fahrzeugbau. Aufgrund der hohen Wärme- und Schalldämmung sind aber auch Anwendungen im Baubereich möglich.

### Beispiele

Ein Formkörper aus Polypropylen-Partikelschaumstoff mit eingeschäumtem GFK-Gitterkern gemäß Figur 1 wurde wie folgt hergestellt:

Ein GFK-Gitterkern (PEKATEX der Typenreihe 30) wurde zugeschnitten und in eine Form gestellt. Anschließend wurden die Waben mit expandiertem Polypropylen (Neopolen P 9225 K der BASF Aktiengesellschaft, Partikeldurchmesser 2,5 bis 4 mm) gefüllt und mit Heißdampf auf eine Dichte von 25 kg/m³ verschäumt. Der Glasfaseranteil im Formkörper betrug 50 bzw. 70 Gew.-%. In Tabelle 1 ist die Druckspannung in Abhängigkeit der Verformung des Formkörpers im Vergleich zu einem Polypropylen-Partikelschaumstoff ohne eingeschäumten Gitterkern zusammengestellt.

**Tabelle 1**

| | Vergleich | Beispiel 1 | Beispiel 2 |
|---|---|---|---|
| | 0 | 50 Gew.-% Glas | 70 Gew.-% Glas |

| Stauchung [%] | Spannung [MPa] | | |
|---|---|---|---|
| 0 | 0 | 0 | 0 |
| 5 | 0,04 | 0,04 | 0,04 |
| 10 | 0,06 | 0,28 | 0,5 |
| 15 | 0,077 | 0,22 | 0,45 |
| 20 | 0,091 | 0,21 | 0,42 |
| 25 | 0,103 | 0,24 | 0,43 |
| 30 | 0,112 | 0,24 | 0,41 |
| 35 | 0,123 | 0,211 | 0,43 |
| 40 | 0,138 | 0,23 | 0,38 |
| 45 | 0,157 | 0,229 | |
| 50 | 0,182 | 0,26 | |
| 55 | 0,207 | 0,28 | |
| 60 | 0,237 | 0,3 | |
| 65 | 0,272 | 0,34 | |
| 70 | 0,316 | 0,388 | |
| 75 | 0,384 | 0,445 | |
| 78,6 | 0,448 | 0,496 | |

## Patentansprüche

1. Formkörper aus Thermoplast-Partikelschaumstoff mit einem eingeschäumten Gitterkern.

2. Formkörper nach Anspruch 1, **dadurch gekennzeichnet, dass** der Thermoplast-Partikelschaumstoff durch Verschweißen von expandierbarem Polystyrol (EPS), expandiertem Polypropylen (EPP) oder expandiertem Polyethylen (EPE) besteht.

3. Formkörper nach Anspruch 2, **dadurch gekennzeichnet, dass** der Thermoplast-Partikelschaumstoff eine Dichte im Bereich von 15 bis 150 g/m³ aufweist.

4. Formkörper nach einem der Ansprüche 1 bis 3, **dadurch gekennzeichnet, dass** der Gitterkern Wabenelemente aus Aluminium-, Polypropylen-, Kohlenstoff-, Polyamid- oder Glas aufweist.

5. Formkörper nach Anspruch 4, **dadurch gekennzeichnet, dass** die Wabenelemente einen Durchmesser im Bereich von 5 bis 100 mm und eine Wandstärke im Bereich von 0,1 bis 2,5 mm aufweisen.

6. Formkörper nach Anspruch 4 oder 5, **dadurch gekennzeichnet, dass** der Gitterkern aus einer Glasfasergewebematte mit einer Maschenweite im Bereich von 1 bis 25 mm und einem Rasterabstand im Bereich von 10 bis 150 mm besteht.

7. Verfahren zur Herstellung eines Formkörpers aus Thermoplast-Partikelschaumstoff, umfassend die Schritte
a) Zuschneiden und Einlegen eines Gitterkerns in ein Formwerkzeug,
b) Befüllen des Formwerkzeuges mit Thermoplast-Schaumpartikeln,
c) Verschweißen der Thermoplast-Schaumpartikel mit Heißluft oder Wasserdampf.

8. Verfahren zur Herstellung eines Sandwichelementes, umfassend die Schritte
a) Herstellen eines Thermoplast-Partikelschaumstoffes mit eingeschäumtem Gitterkern gemäß Anspruch 4 und gegebenenfalls Zuschneiden in Form von Platten,
b) Aufbringen einer Deckschicht aus glasfaserverstärktem Kunststoff (GFK) auf mindestens zwei gegenüberliegenden Flachseiten der Platte.

9. Verfahren nach Anspruch 8, **dadurch gekennzeichnet, dass** Schritt b) durch Laminieren einer GFK-Platte oder durch Vakuuminjektion eines Kunststoffharzes erfolgt.

10. Sandwichelement, erhältlich nach dem Verfahren gemäß Anspruch 9.
